# FASCICULE DE BREVET EUROPEEN

(11) **EP 3 411 254 B1**
(45) Date de publication et mention de la délivrance du brevet: **04.03.2020**
(21) Numéro de dépôt: 17707609.8
(22) Date de dépôt: 01.02.2017
(51) Int. Cl.: B60K 11/08

(54) **DISPOSITIF D'OBTURATION D'ENTRÉE D'AIR DE FACE AVANT DE VÉHICULE AUTOMOBILE ET SON PROCÉDÉ DE FABRICATION**
VORRICHTUNG ZUM ABDICHTEN DES FRONTLUFTEINLASSES EINES KRAFTFAHRZEUGS UND VERFAHREN ZUR HERSTELLUNG DAVON
DEVICE FOR SEALING THE FRONT-END AIR INTAKE OF A MOTOR VEHICLE AND METHOD FOR MANUFACTURING SAME

(30) Priorité: 03.02.2016 FR 1650851
(43) Date de publication de la demande: 12.12.2018
(73) Titulaire: Valeo Systemes Thermiques, 78320 Le Mesnil Saint Denis (FR)
(72) Inventeur: HERLEM, Jean-Paul, 78180 Montigny Le Bretonneux (FR); GUYOMARD, Jean-Nicolas, 27930 Le Mesnil Fuguet (FR)
(74) Mandataire: Tran, Chi-Hai
(86) Numéro de dépôt international: PCT/FR2017/050218
(87) Numéro de publication internationale: WO 2017/134381

(56) Documents cités:
- EP-A1- 1 785 292
- DE-A1-102013 213 136
- FR-A- 520 722
- US-A- 3 226 025

## Description

La présente invention concerne les dispositifs d'obturation et plus précisément un dispositif d'obturation d'entrée d'air de face avant de véhicule automobile ainsi que son procédé de fabrication.

Les faces avant de véhicules automobiles sont généralement composées de deux entrées d'air principales dites voie haute et voie basse, séparées par une poutre pare-choc. Derrière cette poutre pare-choc sont généralement placés les échangeurs de chaleur du véhicule automobile, comme par exemple celui utilisé pour la climatisation de l'habitacle ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur. Il est ainsi possible d'optimiser l'efficacité de ces échangeurs de chaleur en fonction des besoins et en faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Généralement, le dispositif permettant le passage d'une position d'obturation à une position d'ouverture des volets comporte un actionneur le plus souvent électrique, faisant pivoter les volets en synchronisme, au moyen d'une bielle de commande.

Voir par exemple le document US3226025. Afin d'alimenter l'actionneur, il est nécessaire d'inclure au dispositif d'obturation un câblage électrique. De façon connue, ledit câblage électrique est accroché au cadre support au moyen de clips amovibles qui sont installés lors du montage du dispositif d'obturation.

Cependant, ce type d'accroche du câblage électrique entraîne un coût de production augmenté car il nécessite une étape de mise en place des clips amovibles qui se fait manuellement.

Un des buts de la présente invention est donc de remédier au moins partiellement aux inconvénients de l'art antérieur et de proposer un dispositif d'obturation amélioré ainsi que son procédé de fabrication.

La présente invention concerne donc un dispositif d'obturation pour entrée d'air de face avant de véhicule automobile, comprenant :
▪ un cadre support comportant deux traverses longitudinales parallèles entre elles et deux montants latéraux perpendiculaires auxdites traverses longitudinales et reliant lesdites traverses longitudinales,
▪ au moins un volet monté pivotant autour d'un axe de pivotement entre une position d'obturation et une position d'ouverture, ledit au moins un volet étant installé au sein du cadre support,
▪ au moins un élément de commande électrique pilotant le positionnement du ou des volets et apte à être raccordé au système électrique du véhicule automobile par au moins un câble d'alimentation électrique,
le cadre support comportant au moins un dispositif de fixation à emboîtage élastique du ou des câbles d'alimentation électrique, ledit dispositif à emboîtage élastique venant de matière avec ledit cadre support.

Le fait que le cadre support comporte directement au moins un dispositif de fixation à emboîtage élastique et que ce dernier vienne directement de matière avec ledit cadre support, permet notamment un gain de temps lors du processus de fabrication du dispositif d'obturation en évitant une étape de mise en place de moyens de fixation des câbles d'alimentation électrique. L'opérateur n'a qu'à insérer les câbles d'alimentation électrique dans les dispositifs de fixation à emboîtage élastique et à brancher lesdits câbles d'alimentation électrique à l'élément de commande pour finaliser le montage du dispositif d'obturation avant son installation sur le véhicule automobile. Il est ainsi possible de livrer directement au constructeur automobile un dispositif d'obturation déjà câblé et ne nécessitant pas une étape compliquée de montage sur le véhicule automobile.

Selon un aspect de l'invention, au moins un desdits montants latéraux comporte au moins un dispositif de fixation à emboîtage élastique.

Selon un autre aspect de l'invention, le ou les dispositif de fixation à emboîtage élastique sont disposés sur la face arrière d'au moins un montant latéral.

Selon un autre aspect de l'invention, au moins une desdites traverse longitudinales comporte au moins un dispositif de fixation à emboîtage élastique.

Selon un autre aspect de l'invention, la traverse longitudinale inférieure comporte au moins un dispositif de fixation à emboîtage élastique.

Selon un autre aspect de l'invention, au moins un dispositif de fixation à emboîtage élastique comporte deux pattes élastiques placées en vis à vis et entre lesquelles le ou les câbles d'alimentation électrique sont aptes à venir se loger, les extrémités desdites pattes élastiques étant séparées d'une distance inférieure au diamètre du ou des câbles d'alimentation électrique de sorte à recouvrir partiellement le ou lesdits câbles d'alimentation.

Selon un autre aspect de l'invention, au moins un dispositif de fixation à emboîtage élastique comporte :
∘ une patte élastique, et
∘ une paroi rigide placée en vis à vis de ladite patte élastique,
ladite patte élastique comportant à son extrémité d'un crochet, ledit crochet s'étendant entre la patte élastique et ladite paroi rigide.

Selon un autre aspect de l'invention, ledit cadre support comporte au moins une gorge dans laquelle passent le ou les câbles d'alimentation électrique.

Selon un autre aspect de l'invention, une des parois de la gorge comporte au moins un évidement à l'intérieur duquel est placé la patte élastique, la paroi rigide placée en vis à vis de ladite patte élastique étant la paroi opposée de ladite gorge.

La présente invention concerne également un procédé de fabrication d'un dispositif d'obturation pour entrée d'air de face avant de véhicule automobile, comprenant :
▪ un cadre support comportant deux traverses longitudinales parallèles entre elles et deux montants latéraux perpendiculaires auxdites traverses longitudinales et reliant lesdites traverses longitudinales,
▪ au moins un volet monté pivotant autour d'un axe de pivotement entre une position d'obturation et une position d'ouverture, ledit au moins un volet étant installé au sein du cadre support,
▪ au moins un élément de commande électrique pilotant le positionnement du ou des volets et apte à être raccordé au système électrique du véhicule automobile par au moins un câble d'alimentation électrique,
ledit procédé de fabrication comprenant les étapes suivantes :
▪ fabrication du cadre support, ledit cadre support comportant au moins un dispositif de fixation à emboîtage élastique du ou des câbles d'alimentation électrique, ledit dispositif de fixation à emboîtage élastique venant de matière avec ledit cadre support,
▪ mise en place du ou des volets et du ou des éléments de commandes sur le cadre support,
▪ raccordement du ou des câbles d'alimentation électrique aux éléments de commande et fixation du ou desdits câbles d'alimentation électrique auxdits dispositifs de fixation à emboîtage élastique.

Selon un aspect du procédé de fabrication, le cadre support est réalisé en matière plastique et l'étape de fabrication du cadre support est une étape de moulage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective d'un élément de commande,
- la figure 3 montre une représentation schématique de la face avant d'un montant latéral d'un dispositif d'obturation,
- la figure 4 montre une représentation schématique de la face arrière du montant latéral de la figure 3,
- la figure 5 montre une représentation schématique d'un dispositif de fixation à emboîtage élastique selon un premier mode de réalisation,
- la figure 6 montre une représentation schématique d'une traverse longitudinale,
- la figure 7 montre une représentation schématique d'un dispositif de fixation à emboîtage élastique selon un deuxième mode de réalisation.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Sur les différentes figures, nous utiliserons un trièdre XYZ afin de montrer l'angle de vue de chacune desdites figures les unes par rapport aux autres. Les axes de ce trièdre peuvent également correspondre aux différentes orientations du véhicule automobile. L'axe X peut ainsi correspondre à l'axe de la longueur du véhicule, l'axe Y à l'axe de sa largeur et l'axe Z à celui de sa hauteur.

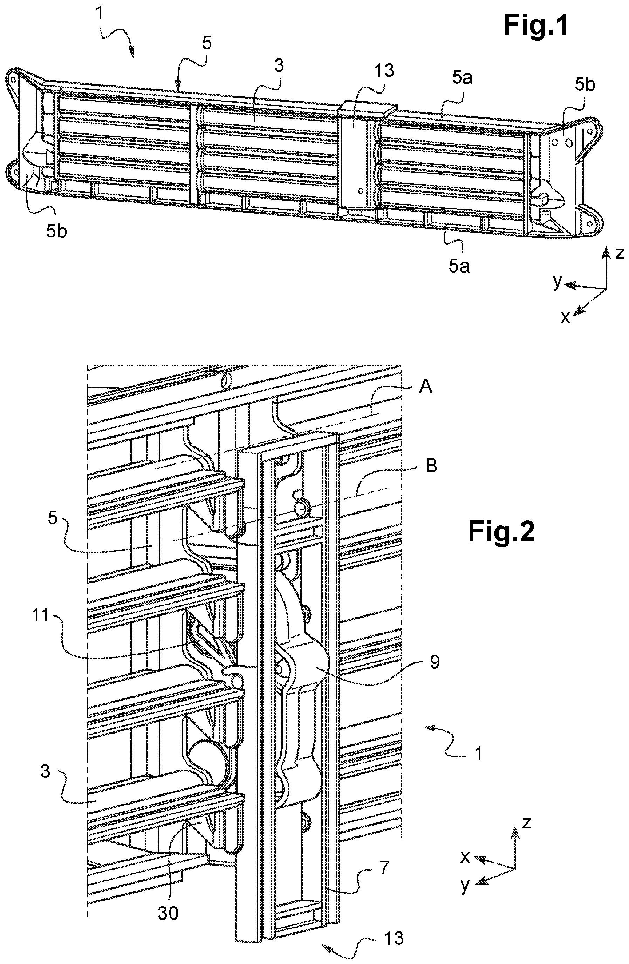

La figure 1 montre une représentation schématique en perspective d'un dispositif d'obturation en position d'obturation. Cette figure 1 montre plus exactement la face avant dudit dispositif d'obturation 1, c'est-à-dire la face dirigée vers l'extérieur du véhicule automobile.

Ledit dispositif d'obturation 1 comporte un cadre support 5 comprenant notamment deux traverses longitudinales 5a, s'étendant parallèlement à l'axe Y du trièdre, et au moins deux montants latéraux 5b, s'étendant parallèlement à l'axe Z du trièdre, et reliant lesdites traverses traverses longitudinales 5a. Avantageusement, le cadre support 5 est réalisé en matière plastique et les deux traverses longitudinales 5a et les au moins deux montants latéraux 5b sont moulés. Afin d'améliorer la rigidité dudit cadre support 5, ce dernier peut être moulé en une seule pièce.

Au sein dudit cadre support 5 est installé le ou les volets 3. Lorsqu'il y a une pluralité de volets 3, ces derniers forment des rangs de volets 3 parallèles entre eux et qui forment un ensemble de volets 3. A l'une des extrémités du volet 3 ou de l'ensemble de volets 3, est placé un élément de commande 13 permettant la rotation du ou des volets 3 autour d'un axe de pivotement A, entre une position d'ouverture (non représentée), où le ou les volets 3 sont disposés de sorte qu'un flux d'air puisse traverser le dispositif d'obturation 1, notamment à l'intérieur du cadre support 5, et une position d'obturation illustrée à la figure 1, où le ou les volets 3 sont agencés de sorte qu'un flux d'air ne puisse pas traverser le dispositif d'obturation 1.

Comme illustré sur la figure 1, il est possible d'avoir un dispositif d'obturation 1 d'une entrée d'air de face avant de véhicule automobile comportant plusieurs ensembles de volets 3 s'étendant sur toute la largeur du cadre support 5. Les ensembles de volets 3 peuvent être séparés par un élément de commande 13 afin d'assurer leur rotation synchrone.

Comme le montre la figure 2, l'élément de commande 13 comporte notamment une bielle 7 de commande. Le ou les volets 3 comportent un bras de commande 30, perpendiculaire à leur axe de pivotement A et portant un axe de liaison B. L'axe de pivotement A et les axes de liaison B sont tous parallèles à l'axe Y du trièdre. Ledit bras de commande 30 vient généralement de matière avec lesdits volets 3.

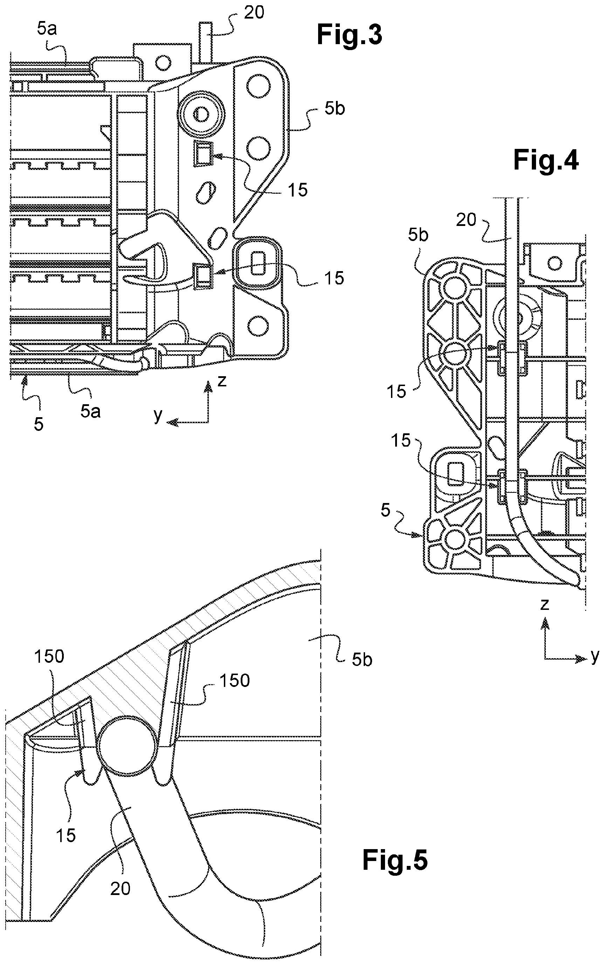

L'élément de commande 13 comporte également un actionneur 9. L'actionneur 9 peut notamment être un moteur électrique qui applique à la bielle 7 un mouvement de translation selon l'axe Z du trièdre, par rotation d'un levier 11. L'actionneur 9 est connecté électriquement à une source de puissance électrique (batterie et/ou alternateur) du véhicule par des câbles d'alimentation électrique 20 (visibles sur les figures 3 à 6).

Les volets 3 peuvent pivoter chacun autour d'un axe de pivotement A défini par leur liaison avec le cadre support 5. Les axes de liaison B entre les volets 3 et la bielle 7 de commande sont excentrés par rapport aux axes de pivotement A de sorte qu'un mouvement de translation parallèlement à l'axe Z du trièdre de la bielle 7 de commande, sous l'action de l'actionneur 9, entraîne le pivotement des volets 3 autour de leurs axes de pivotement A respectifs et donc le passage desdits volets 3 d'une position à une autre.

Tous les volets 3 étant reliés à la même bielle 7, le passage d'une position d'ouverture à une position d'obturation est synchrone pour tous lesdits volets 3. Il est également possible que l'ensemble ne comporte qu'un seul volet 3.

Comme le montrent les figure 3 à 7, le cadre support 5 comporte au moins un dispositif de fixation à emboîtage élastique 15 du ou des câbles d'alimentation électrique 20. Ce dispositif à emboîtage élastique 15 vient de matière avec le cadre support 5.

Le fait que le cadre support 5 comporte directement au moins un dispositif de fixation à emboîtage élastique 15 et que ce dernier vienne directement de matière avec ledit cadre support 5 permet notamment un gain de temps lors du processus de fabrication du dispositif d'obturation 1 en évitant une étape de mise en place de moyens de fixation des câbles d'alimentation électrique 20. L'opérateur n'a qu'à insérer les câbles d'alimentation électrique 20 dans les dispositifs de fixation à emboîtage élastique 15 et à brancher lesdits câbles d'alimentation électrique 20 à l'élément de commande 13 pour finaliser le montage du dispositif d'obturation 1 avant son installation sur le véhicule automobile. Il est ainsi possible de livrer directement au constructeur automobile un dispositif d'obturation 1 déjà câblé et ne nécessitant pas une étape compliquée de montage sur le véhicule automobile.

Comme le montrent les figures 3 et 4, le ou les dispositifs de fixation à emboîtage élastique 15 peuvent être disposés sur au moins un des montants latéraux 5b. La figure 3 montre plus précisément la face avant d'un dispositif d'obturation 1 et la figure 4 montre plus précisément la face arrière d'un dispositif d'obturation 1. On entend par face avant d'un dispositif d'obturation 1 la face dudit dispositif d'obturation 1 destinée à être orientée vers l'avant du véhicule automobile et par analogie, on entend par face arrière d'un dispositif d'obturation 1 la face dudit dispositif d'obturation 1 destinée à être orientée vers l'arrière du véhicule automobile.

De préférence, le ou les dispositifs de fixation à emboîtage élastique 15 peuvent être disposés sur la face arrière des montants latéraux 5b de sorte à être protégés des conditions extérieures. En effet, à cette position, le cadre support 5 et notamment le montant latéral 5b sur lequel sont disposés les dispositifs de fixation à emboîtage élastique 15, fait rempart de protection aux éléments extérieurs tels que la pluie et le vent qui pourraient détériorer le ou les câbles d'alimentation électrique 20.

Selon un premier mode de réalisation illustré à la figure 5, le ou les dispositifs de fixation à emboîtage élastique 15 peuvent comporter deux pattes élastiques 150 placées en vis à vis entre lesquelles le ou les câbles d'alimentation électrique 20 sont aptes à venir se loger. Les extrémités des pattes élastiques 150 sont séparées d'une distance inférieure au diamètre du ou des câbles d'alimentation électrique 20 de sorte à recouvrir partiellement ces derniers. La mise en place du ou des câbles d'alimentation électrique 20 se fait alors simplement en positionnant ces derniers au niveau de l'espace entre lesdites pattes élastiques 150 et en poussant le ou les câbles d'alimentation électrique 20 entre lesdites pattes élastiques 150 de sorte à les écarter l'une de l'autre et permettre l'insertion du ou des câbles d'alimentation électrique 20 entre lesdites pattes élastiques 150. Un tel dispositif de fixation à emboîtage élastique 15 permet donc une fixation simple et rapide du ou des câbles d'alimentation électrique 20.

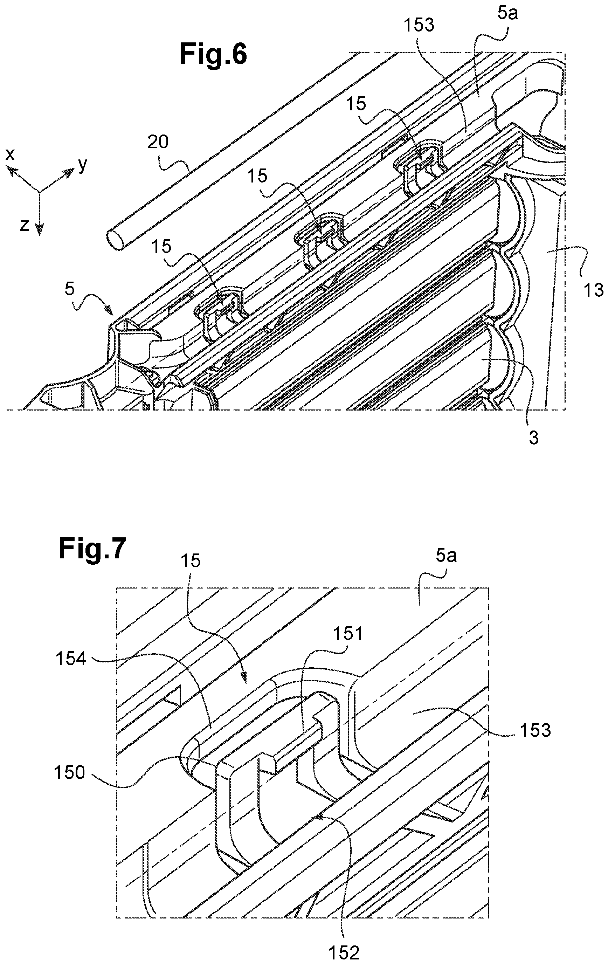

Le ou les dispositifs de fixation à emboîtage élastique 15 peuvent également être disposés sur au moins une desdites traverses longitudinales 5a, comme illustré à la figure 6. De préférence, le ou les dispositifs de fixation à emboîtage élastique 15 peuvent être disposés sur la traverse longitudinale 5a inférieure. Par traverse longitudinale 5a inférieure, on entend la traverse longitudinale 5a qui est la plus proche du sol lorsque le dispositif d'obturation 1 est monté sur le véhicule automobile. Sur la figure 6, le dispositif d'obturation 1 a été retourné pour montrer plus en détail ladite traverse longitudinale 5a inférieure. De préférence, le ou les dispositifs de fixation à emboîtage élastique 15 sont disposés sur le coté de la traverse longitudinale 5a inférieure qui est amené à faire face au sol. Le fait que le ou les dispositifs de fixation à emboîtage élastique 15 soient disposés sur la traverse longitudinale 5a inférieure permet également de les protéger des éléments extérieurs comme par exemple l'eau de pluie qui pourrait ruisseler sur le dispositif d'obturation 1.

Selon un deuxième mode de réalisation illustré à la figure 7, le dispositif de fixation à emboîtage élastique 15 peut comporter :
∘ une patte élastique 150, et
∘ une paroi rigide 152 placée en vis à vis de ladite patte élastique 150.

La patte élastique 150 comporte à son extrémité un crochet 151. Ce crochet 151 s'étend entre la patte élastique 150 et ladite paroi rigide 152 de sorte à maintenir le ou les câbles d'alimentation électrique 20. La mise en place du ou des câbles d'alimentation électrique 20 se fait alors également simplement en positionnant ces derniers au niveau de l'espace entre la patte élastique 150 et la paroi rigide 152 et en poussant le ou les câbles d'alimentation électrique 20 de sorte à écarter la patte élastique 150 de la paroi rigide 152 et permettre l'insertion du ou des câbles d'alimentation électrique 20 entre ces dernières. Le crochet 151 permet de maintenir le ou les câbles d'alimentation électrique 20 entre la patte élastique 150 et la paroi rigide 152. Un tel dispositif de fixation à emboîtage élastique 15 permet donc une fixation simple et rapide du ou des câbles d'alimentation électrique 20.

Comme le montrent les figures 6 et 7, le cadre support 5, et plus précisément la traverse longitudinale 5a comportant le ou les dispositifs de fixation à emboîtage élastique 15, comporte au moins une gorge 153 dans laquelle passent le ou les câbles d'alimentation électrique 20. La gorge 153 est de préférence parallèle à l'axe d'élongation de la traverse longitudinale 5a et est dont parallèle à l'axe Y du trièdre. Cette gorge 153 permet un bonne protection du ou des câbles d'alimentation électrique 20 et permet également de les dissimuler et d'éviter qu'ils prennent de la place ou soient trop exposés. De préférence, la gorge 153 est disposée sur le coté de la traverse longitudinale 5a inférieure qui est amené à faire face au sol.

La gorge 153 peut ainsi comporter au moins un évidement 154 à l'intérieur duquel est placée la patte élastique 150 afin que ladite patte élastique 150 puisse se déformer. La paroi rigide 152 placée en vis à vis de ladite patte élastique 150 peut avantageusement être la paroi opposée de ladite gorge 153. Le ou les câbles d'alimentation électrique 20 sont alors maintenus au sein de la gorge 153 par le ou les dispositifs de fixation à emboîtage élastique 15.

La présente invention concerne également un procédé de fabrication d'un dispositif d'obturation 1 pour entrée d'air de face avant de véhicule automobile, ledit dispositif d'obturation comprenant :
▪ un cadre support 5 comportant deux traverses longitudinales 5a parallèles entre elles et deux montants latéraux 5b perpendiculaires auxdites traverses longitudinales 5a et reliant lesdites traverses longitudinales 5a,
▪ au moins un volet 3 monté pivotant autour d'un axe de pivotement A entre une position d'obturation et une position d'ouverture, ledit au moins un volet 3 étant installé au sein du cadre support 5,
▪ au moins un élément de commande 13 électrique pilotant le positionnement du ou des volets 3 et apte à être raccordé au système électrique du véhicule automobile par au moins un câble d'alimentation électrique 20.

Ledit procédé de fabrication comprend les étapes suivantes :
- fabrication du cadre support 5, ledit cadre support 5 comportant au moins un dispositif de fixation à emboîtage élastique 15 du ou des câbles d'alimentation électrique 20, ledit dispositif de fixation à emboîtage élastique 15 venant de matière avec ledit cadre support 5,
- mise en place du ou des volets 3 et du ou des éléments de commandes 13 sur le cadre support 5,
- raccordement du ou des câbles d'alimentation électrique 20 à l'élément de commande 13 et fixation du ou desdits câbles d'alimentation électrique 20 auxdits dispositifs de fixation à emboîtage élastique 15.

Ainsi, on voit bien que le dispositif d'obturation 1 de part la présence de dispositifs de fixation à emboîtage élastique 15 permet des économies de temps dans le processus de fabrication dudit dispositif d'obturation 1 et permet également une bonne protection du ou des câbles d'alimentation électrique 20.

## Revendications

1. Dispositif d'obturation (1) pour entrée d'air de face avant de véhicule automobile, comprenant :
▪ un cadre support (5) comportant deux traverses longitudinales (5a) parallèles entre elles et deux montants latéraux (5b) perpendiculaires auxdites traverses longitudinales (5a) et reliant lesdites traverses longitudinales (5a),
▪ au moins un volet (3) monté pivotant autour d'un axe de pivotement (A) entre une position d'obturation et une position d'ouverture, ledit au moins un volet (3) étant installé au sein du cadre support (5),
▪ au moins un élément de commande (13) électrique pilotant le positionnement du ou des volets (3) et apte à être raccordé au système électrique du véhicule automobile par au moins un câble d'alimentation électrique (20),
**caractérisé en ce que** le cadre support (5) comporte au moins un dispositif de fixation à emboîtage élastique (15) du ou des câbles d'alimentation électrique (20), ledit dispositif à emboîtage élastique (15) venant de matière avec ledit cadre support (5).

2. Dispositif d'obturation (1) selon la revendication 1, **caractérisé en ce qu'**au moins un desdits montants latéraux (5b) comporte au moins un dispositif de fixation à emboîtage élastique (15).

3. Dispositif d'obturation (1) selon la revendication précédente, **caractérisé en ce que** le ou les dispositif de fixation à emboîtage élastique (15) sont disposés sur la face arrière d'au moins un montant latéral (5b).

4. Dispositif d'obturation (1) selon la revendication 1, **caractérisé en ce qu'**au moins une desdites traverse longitudinales (5a) comporte au moins un dispositif de fixation à emboîtage élastique (15).

5. Dispositif d'obturation (1) selon la revendication précédente, **caractérisé en ce que** la traverse longitudinale (5a) inférieure comporte au moins un dispositif de fixation à emboîtage élastique (15).

6. Dispositif d'obturation (1) selon l'une des revendications précédentes, **caractérisé en ce qu'**au moins un dispositif de fixation à emboîtage élastique (15) comporte deux pattes élastiques (150) placées en vis à vis et entre lesquelles le ou les câbles d'alimentation électrique (20) sont aptes à venir se loger, les extrémités desdites pattes élastiques (150) étant séparées d'une distance inférieure au diamètre du ou des câbles d'alimentation électrique (20) de sorte à recouvrir partiellement le ou lesdits câbles d'alimentation (20).

7. Dispositif d'obturation (1) selon l'une des revendications précédentes, **caractérisé en ce qu'**au moins un dispositif de fixation à emboîtage élastique (15) comporte :
∘ une patte élastique (150), et
∘ une paroi rigide (152) placée en vis à vis de ladite patte élastique (150), ladite patte élastique (150) comportant à son extrémité d'un crochet (151), ledit crochet (151) s'étendant entre la patte élastique (150) et ladite paroi rigide (150).

8. Dispositif d'obturation (1) selon l'une des revendications précédentes, **caractérisé en ce que** ledit cadre support (5) comporte au moins une gorge (153) dans laquelle passent le ou les câbles d'alimentation électrique (20).

9. Dispositif d'obturation (1) selon les revendications 7 et 8, **caractérisé en ce qu'**une des parois de la gorge (153) comporte au moins un évidement (154) à l'intérieur duquel est placé la patte élastique (150), la paroi rigide (152) placée en vis à vis de ladite patte élastique (150) étant la paroi opposée de ladite gorge (153).

10. Procédé de fabrication d'un dispositif d'obturation (1) pour entrée d'air de face avant de véhicule automobile, comprenant :
▪ un cadre support (5) comportant deux traverses longitudinales (5a) parallèles entre elles et deux montants latéraux (5b) perpendiculaires auxdites traverses longitudinales (5a) et reliant lesdites traverses longitudinales (5a),
▪ au moins un volet (3) monté pivotant autour d'un axe de pivotement (A) entre une position d'obturation et une position d'ouverture, ledit au moins un volet (3) étant installé au sein du cadre support (5),
▪ au moins un élément de commande (13) électrique pilotant le positionnement du ou des volets (3) et apte à être raccordé au système électrique du véhicule automobile par au moins un câble d'alimentation électrique (20),
ledit procédé de fabrication comprenant les étapes suivantes :
▪ fabrication du cadre support (5), ledit cadre support (5) comportant au moins un dispositif de fixation à emboîtage élastique (15) du ou des câbles d'alimentation électrique (20), ledit dispositif de fixation à emboîtage élastique (15) venant de matière avec ledit cadre support (5),
▪ mise en place du ou des volets (3) et du ou des éléments de commandes (13) sur le cadre support (5),
▪ raccordement du ou des câbles d'alimentation électrique (20) aux éléments de commande (13) et fixation du ou desdits câbles d'alimentation électrique (20) auxdits dispositifs de fixation à emboîtage élastique (15).

11. Procédé de fabrication selon la revendication 10, **caractérisé en ce que** le cadre support (5) est réalisé en matière plastique et que l'étape de fabrication du cadre support (5) est une étape de moulage.

## Patentansprüche

1. Vorrichtung zum Verschließen (1) des vorderen Lufteinlasses eines Kraftfahrzeugs, die Folgendes aufweist:
• einen Tragrahmen (5) mit zwei parallel zueinander verlaufenden Längsstegen (5a) und zwei senkrecht zu den Längsstegen (5a) verlaufenden Seitenstützen (5b), die die Längsstege (5a) miteinander verbinden,
• mindestens eine Klappe (3), die zwischen einer Schließstellung und einer Offenstellung um eine Schwenkachse (A) schwenkbar gelagert ist, wobei die mindestens eine Klappe (3) innerhalb des Tragrahmens (5) eingebaut ist,
• mindestens ein elektrisches Betätigungselement (13), das die Positionierung der Klappe(n) (3) steuert und geeignet ist, über mindestens ein elektrisches Versorgungskabel (20) mit dem elektrischen System des Kraftfahrzeugs verbunden zu werden,
**dadurch gekennzeichnet, dass** der Tragrahmen (5) mindestens eine Befestigungsvorrichtung mit elastischer Einfügung (15) für das oder die elektrischen Versorgungskabel (20) aufweist, wobei die Vorrichtung mit elastischer Einfügung (15) einteilig mit dem Tragrahmen (5) ausgebildet ist.

2. Vorrichtung zum Verschließen (1) nach Anspruch 1, **dadurch gekennzeichnet, dass** mindestens eine der Seitenstützen (5b) mindestens eine Befestigungsvorrichtung mit elastischer Einfügung (15) aufweist.

3. Vorrichtung zum Verschließen (1) nach dem vorausgehenden Anspruch, **dadurch gekennzeichnet, dass** die Befestigungsvorrichtung(en) mit elastischer Einfügung (15) an der Rückseite der mindestens einen Seitenstütze (5b) angebracht sind.

4. Vorrichtung zum Verschließen (1) nach Anspruch 1, **dadurch gekennzeichnet, dass** mindestens einer der Längsstege (5a) mindestens eine Befestigungsvorrichtung mit elastischer Einfügung (15) aufweist.

5. Vorrichtung zum Verschließen (1) nach dem vorausgehenden Anspruch, **dadurch gekennzeichnet, dass** der untere Längssteg (5a) mindestens eine Befestigungsvorrichtung mit elastischer Einfügung (15) aufweist.

6. Vorrichtung zum Verschließen (1) nach einem der vorausgehenden Ansprüche, **dadurch gekennzeichnet, dass** mindestens eine Befestigungsvorrichtung mit elastischer Einfügung (15) zwei gegenüberliegende elastische Laschen (150) aufweist, zwischen denen das oder die elektrische(n) Versorgungskabel (20) untergebracht werden kann/können, wobei die Enden der elastischen Laschen (150) um einen Abstand voneinander getrennt sind, der kleiner ist als der Durchmesser des oder der elektrischen Versorgungskabel (20), um das oder die elektrischen Versorgungskabel (20) teilweise abzudecken.

7. Vorrichtung zum Verschließen (1) nach einem der vorausgehenden Ansprüche, **dadurch gekennzeichnet, dass** mindestens eine Befestigungsvorrichtung mit elastischer Einfügung (15) Folgendes aufweist:
• eine elastische Lasche (150) und
• eine starre Wand (152), die gegenüber der elastischen Lasche (150) angeordnet ist,
wobei die elastische Lasche (150) an ihrem Ende einen Haken (151) aufweist, wobei sich der Haken (151) zwischen der elastischen Lasche (150) und der starren Wand (150) erstreckt.

8. Vorrichtung zum Verschließen (1) nach einem der vorausgehenden Ansprüche, **dadurch gekennzeichnet, dass** der Tragrahmen (5) mindestens eine Nut (153) aufweist, durch die das oder die elektrischen Versorgungskabel (20) verläuft/verlaufen.

9. Vorrichtung zum Verschließen (1) nach den Ansprüchen 7 und 8, **dadurch gekennzeichnet, dass** eine der Wände der Nut (153) mindestens eine Aussparung (154) aufweist, in die die elastische Lasche (150) eingelegt ist, wobei die starre Wand (152), die gegenüber der elastischen Lasche (150) angeordnet ist, die gegenüberliegende Wand der Nut (153) ist.

10. Herstellungsverfahren für eine Vorrichtung zum Verschließen (1) des vorderen Lufteinlasses eines Kraftfahrzeugs, die Folgendes aufweist:
• einen Tragrahmen (5) mit zwei parallel zueinander verlaufenden Längsstegen (5a) und zwei senkrecht zu den Längsstegen (5a) verlaufenden Seitenstützen (5b), die die Längsstege (5a) miteinander verbinden,
• mindestens eine Klappe (3), die zwischen einer Schließstellung und einer Offenstellung um eine Schwenkachse (A) schwenkbar gelagert ist, wobei die mindestens eine Klappe (3) innerhalb des Tragrahmens (5) eingebaut ist,
• mindestens ein elektrisches Betätigungselement (13), das die Positionierung der Klappe (n) (3) steuert und geeignet ist, über mindestens ein elektrisches Versorgungskabel (20) mit dem elektrischen System des Kraftfahrzeugs verbunden zu werden,
wobei das Herstellungsverfahren die folgenden Schritte aufweist:
• Herstellen des Tragrahmens (5), wobei der Tragrahmen (5) mindestens eine Befestigungsvorrichtung mit elastischer Einfügung (15) für das oder die elektrische(n) Versorgungskabel (20) aufweist, wobei die Befestigungsvorrichtung mit elastischer Einfügung (15) einteilig mit dem Tragrahmen (5) ausgebildet ist,
• Positionieren der Klappe (n) (3) und des oder der Betätigungselemente(s) (13) auf dem Tragrahmen (5),
• Verbinden des oder der elektrischen Versorgungskabel (s) (20) mit den Betätigungselementen (13) und Befestigen des oder der elektrischen Versorgungskabel(s) (20) an den Befestigungsvorrichtungen mit elastischer Einfügung (15).

11. Herstellungsverfahren nach Anspruch 10, **dadurch gekennzeichnet, dass** der Tragrahmen (5) aus Kunststoff hergestellt ist und dass der Herstellungsschritt des Tragrahmens (5) ein Formgussschritt ist.

## Claims

1. Sealing device (1) for the front-end air inlet of a motor vehicle, comprising:
▪ a supporting frame (5) comprising two longitudinal crossmembers (5a) parallel to one another and two side posts (5b) perpendicular to said longitudinal crossmembers (5a) and connecting said longitudinal crossmembers (5a),
▪ at least one flap (3) mounted pivotably about a pivot axis (A) between a sealing position and an open position, said at least one flap (3) being installed within the supporting frame (5),
▪ at least one electric control element (13) that controls the positioning of the flap or flaps (3) and is suitable for being connected to the electric system of the motor vehicle by at least one power supply cable (20),
**characterized in that** the supporting frame (5) comprises at least one device for snap-fit attachment (15) of the power supply cable or cables (20), said snap-fit device (15) being integral with said supporting frame (5).

2. Sealing device (1) according to Claim 1, **characterized in that** at least one of said side posts (5b) comprises at least one snap-fit attachment device (15) .

3. Sealing device (1) according to the preceding claim, **characterized in that** the snap-fit attachment device or devices (15) are arranged on the rear face of at least one side post (5b).

4. Sealing device (1) according to Claim 1, **characterized in that** at least one of said longitudinal crossmembers (5a) comprises at least one snap-fit attachment device (15).

5. Sealing device (1) according to the preceding claim, **characterized in that** the lower longitudinal crossmember (5a) comprises at least one snap-fit attachment device (15) .

6. Sealing device (1) according to one of the preceding claims, **characterized in that** at least one snap-fit attachment device (15) comprises two elastic tabs (150) positioned opposite one another and between which the power supply cable or cables (20) are able to be housed, the ends of said elastic tabs (150) being separated by a distance smaller than the diameter of the power supply cable or cables (20) so as to partially cover said power supply cable or cables (20).

7. Sealing device (1) according to one of the preceding claims, **characterized in that** at least one snap-fit attachment device (15) comprises:
∘ an elastic tab (150), and
∘ a rigid wall (152) positioned opposite said elastic tab (150),
said elastic tab (150) comprising, at the end of same, a hook (151), said hook (151) extending between the elastic tab (150) and said rigid wall (150).

8. Sealing device (1) according to one of the preceding claims, **characterized in that** said supporting frame (5) comprises at least one groove (153) into which the power supply cable or cables (20) pass.

9. Sealing device (1) according to Claims 7 and 8, **characterized in that** one of the walls of the groove (153) comprises at least one recess (154) inside which the elastic tab (150) is positioned, the rigid wall (152) positioned opposite said elastic tab (150) being the opposing wall of said groove (153).

10. Method for manufacturing a sealing device (1) for the front-end air inlet of a motor vehicle, comprising:
▪ a supporting frame (5) comprising two longitudinal crossmembers (5a) parallel to one another and two side posts (5b) perpendicular to said longitudinal crossmembers (5a) and connecting said longitudinal crossmembers (5a),
▪ at least one flap (3) mounted pivotably about a pivot axis (A) between a sealing position and an open position, said at least one flap (3) being installed within the supporting frame (5),
▪ at least one electric control element (13) that controls the positioning of the flap or flaps (3) and is suitable for being connected to the electric system of the motor vehicle by at least one power supply cable (20),
said manufacturing method comprising the following steps:
▪ manufacturing the supporting frame (5), said supporting frame (5) comprising at least one snap-fit attachment device (15) for attaching the power supply cable or cables (20), said snap-fit attachment device (15) being integral with said supporting frame (5),
▪ installing the flap or flaps (3) and the control element or elements (13) on the supporting frame (5),
▪ connecting the power supply cable or cables (20) to the control elements (13) and attaching said power supply cable or cables (20) to said snap-fit attachment devices (15).

11. Manufacturing method according to Claim 10, **characterized in that** the supporting frame (5) is produced from plastic material and the step of manufacturing the supporting frame (5) is a molding step.
